# EUROPEAN PATENT SPECIFICATION

(11) **EP 1 992 709 B1**
(45) Date of publication and mention of the grant of the patent: **15.09.2021**
(21) Application number: 07009626.8
(22) Date of filing: 14.05.2007
(51) Int. Cl.: B22F 10/28, C22C 33/02, B33Y 10/00, B33Y 70/00

(54) **Metal powder for use in additive manufacturing method for the production of three-dimensional objects and method using such metal powder**
Metallpulver zur Verwendung bei additiven Verfahren zur Herstellung von dreidimensionalen Objekten und Verfahren zur Verwendung dieses Metallpulvers
Poudre métallique utilisée dans un procédé additif pour la production d'objets tri-dimensionnels et procédé utilisant cette poudre métallique

(43) Date of publication of application: 19.11.2008
(73) Proprietor: EOS GmbH Electro Optical Systems, 82152 Krailling (DE)
(72) Inventor: Syvänen, Tatu, 21280 Raisio (FI); Nyrhilä, Olli, 21620 Kuusisto (FI); Kotila, Juha, 20540 Turku (FI)
(74) Representative: Prüfer & Partner mbB Patentanwälte · Rechtsanwälte

(56) References cited:
- EP-B1- 1 355 760
- EP-B1- 1 514 622
- EP-B1- 1 963 078
- EP-B1- 1 976 680
- EP-B1- 2 010 370
- EP-B1- 2 581 154
- EP-B1- 2 836 323
- EP-B1- 3 253 515
- WO-A-02/092264
- WO-A1-00/53821
- DE-C1- 10 039 144
- DE-T5-112012 002 221
- JP-A- 10 102 105
- JP-A- 62 030 858
- US-A- 4 430 115
- US-A1- 2004 182 202
- US-B1- 6 461 452
- RENLIANG XU ET AL: "Comparison of sizing small particles using different technologies", POWDER TECHNOLOGY - ELECTROSTATIC PHENOMENA IN PARTICULATE PROCESSES, ELSEVIER, BASEL (CH), vol. 132, no. 2-3, 24 June 2003 (2003-06-24), pages 145-153, XP002711749, ISSN: 0032-5910, DOI: 10.1016/S0032-5910(03)00048-2
- M. Li ET AL: "Comparison of Particle Size Distributions Measured Using Different Techniques", Particulate Science and Technology, vol. 23, no. 3, 24 February 2007 (2007-02-24), pages 265-284, XP055269915, US ISSN: 0272-6351, DOI: 10.1080/02726350590955912
- SPIEKERMANN P: "LEGIERUNGEN - EIN BESONDERES PATENTRECHTLICHES PROBLEM? - LEGIERUNGSPRUEFUNG IM EUROPAEISCHEN PATENTAMT -", MITTEILUNGEN DER DEUTSCHEN PATENTANWAELTE, HEYMANN, KOLN, DE, 1 January 1993 (1993-01-01), pages 178-190, XP000961882, ISSN: 0026-6884
- WEGST C W ED - WEGST C W: "STAHLSCHLUESSEL, PASSAGE", 1 January 2001 (2001-01-01), STAHLSCHLUESSEL, MARBACH : VERLAG STAHLSCHLUESSEL WEGST, DE, PAGE(S) 350, XP001544004, ISBN: 978-3-922599-17-3

## Description

The invention relates to a metal powder for use in an additive method for the production of three-dimensional objects and to a method using such a powder.

Direct Metal Laser Sintering (DMLS) is a laser-based rapid prototyping and tooling process by means of which net shape parts are fabricated in a single process. Complex parts can be produced directly from 3D-CAD models by layer-wise solidification of metal powder layers in portions of the layer corresponding to the cross-section of the three-dimensional part in the respective layer. This process is described in detail for example in Juha Kotila et al., Steel-based Metal Powder Blend for Direct Metal Laser Sintering Process, Advances in Powder Metallurgy & Particular Materials - 1999, Vol.2 Part 5, p. 87-93 and in T. Syvänen et al., New Innovations in Direct Metal Laser Sintering Process - A Step Forward in Rapid Prototyping and Manufacturing, Laser Materials Processing, Vol. 87, 1999, p. 68 to 76.

There is a high demand for processing metal materials by additive manufacturing processes such as Direct Metal Laser Sintering, so that rapid manufacturing can be applied to applications where a specific material having well-known properties is required. One important class of materials is stainless steel which is widely used in many products. Many different kinds of stainless steel exist and are commercially available for conventional manufacturing methods, such as casting, forging, machining etc. as referenced in international standards, reference books, manufacturers' catalogues etc.

One example of a well-known conventional stainless steel is 17-4 PH (US designation) corresponding to 1.4542 European designation. An important characteristic of this material in conventional use is that it can be post-hardened by precipitation hardening ("PH") to significantly increase the hardness. This material in powdered form can be processed by laser sintering to produce metal parts with good quality. Depending on how the parameters which are used in this process are selected, different metallurgical phases can be produced. It has been found that the conventional precipitation hardening process does not work for parts produced by direct metal laser sintering using powder material corresponding to stainless steel 17-4PH and typical processing parameters known from the prior art.

316 L/1.4404 stainless steel has also been used for laser sintering or laser melting.

In WO 02/092264 A, a metallic powder blend is described. Also described is a method for producing products by free form forming via CAD-controlled layer by layer bonding of the power particles mutually and with the previous layer. The blend comprises at least one powder of a second metal alloy with a different, i.e. lower, melting point than the first alloy. The product is given its final hardness and durability by a subsequent precipitation hardening. The precipitation hardening metal alloy is either iron- or copper-based Other applications in which 17-4PH powder material is applied are JP10102105 A and US2004/182202 A1.

It is the object of the invention to provide a metal powder which can be processed by laser sintering or similar additive manufacturing methods using a heat source and whereby the object produced has similar properties compared to that of a stainless steel object produced using a conventional manufacturing method. In particular, the object should be able to undergo the precipitation hardening process to fulfil the requirements of users. Furthermore, a method for producing a three-dimensional object shall be provided.

The object is solved by a metal powder according to claim 1 and by a method according to claim 7. Further developments are given in the dependent claims.

The metal powder according to the invention has the advantage that the object produced can be post-hardened, in particular by means of precipitation hardening, to significantly increase the hardness. Furthermore, the mechanical properties of the three-dimensional object produced by an additive manufacturing method are similar to those achieved using conventional 17-4 PH stainless steel and a conventional manufacturing method. This opens a wide range of applications for laser sintering and other additive processes.

Further advantages of the invention will become apparent from the description of embodiments in conjunction with the accompanying drawings, wherein:
- Fig. 1: is a schematic representation of a laser sintering apparatus,
- Fig. 2: is a schematic presentation of laser scanning in the DLMS-process,
- Fig. 3a) - 3c): graphs showing the result of typical tensile testing behaviour of parts produced using the metal powder according to the invention, and
- Fig. 4: shows yield and ultimate tensile strength results of parts produced using the metal powder according to the invention with different heat treatment cycles.

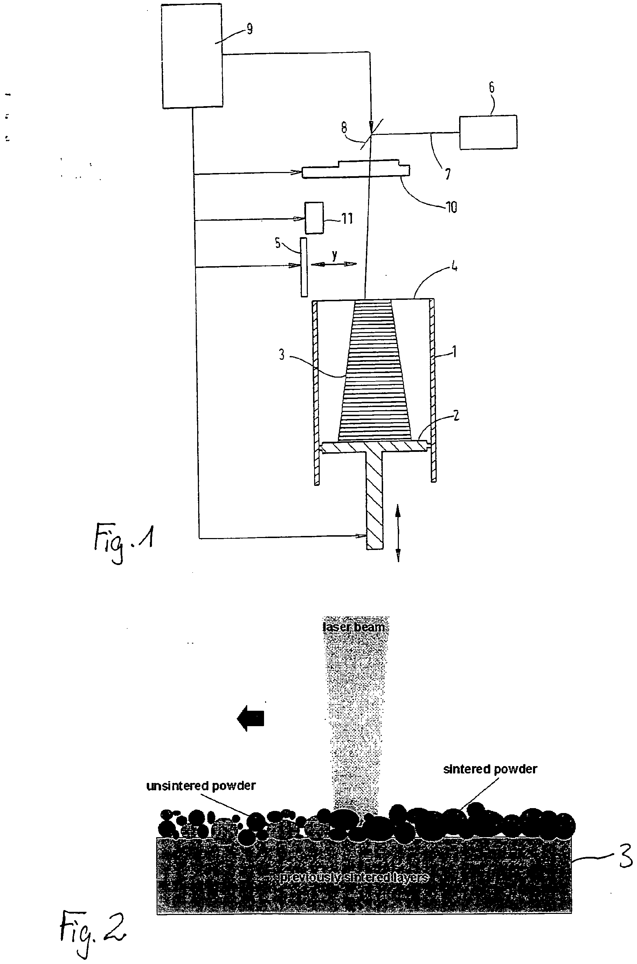

The invention will now be described with reference to the direct metal laser sintering process as an example for an additive manufacturing method. As shown in Fig. 1 the laser sintering apparatus comprises a build container 1 open at the top with a support 2 carrying the object 3 to be built. The support 2 is movable in the build container 1 in a vertical direction and is adjusted in such a way that the layer of the object which is to be solidified defines a working plane 4. A layer generating device 5 for generating a layer of pulverulent build material on the support or on a previously applied layer is provided. The laser sintering apparatus further comprises a laser 6 emitting a laser beam 7 which is deflected by a deflection unit 8 and passes through an optical unit 10 which focuses the laser beam onto the working plane 4. A control unit 9 controls the deflection unit 8 and the optical unit 10 in such a way that the laser beam 7 can be focussed to any position in the working plane. A powder reservoir and feeding device 11 is provided which is, in the example shown, arranged above the build container and which contains the pulverulent build material and feeds it to the layer generating device 5.

According to the invention, the pulverulent build material is a stainless steel powder. The powder is produced in a known manner. Preferably it is produced by means of an atomisation process, for example gas atomisation, wherein the molten material undergoes atomisation using gases. However, other processes may also be used, for example water atomisation. As a result of the production process, each powder particle has the same or at least a similar chemical composition. The components can be pre-alloyed. In addition, the powder particles have spherical or approximately spherical shape with an aspect ratio up to 1:2.

The grain size distribution of the powder particles according to the invention is between 0,1µm and 125µm, the median size expressed as d50 value is between 20 µm and 100 µm, preferably between 30 µm and 50 µm.

The metal powder according to the invention, comprises iron and the following components given in weight percent (wt.-%):

| | |
|---|---|
| carbon: | 0.07 max. wt-%, |
| chromium: | 14.00 - 15.50 wt.-%, |
| nickel: | 3.5 - 5.0 wt.-%, and |
| copper | 3.0 - 4.5 wt.-% |

The powder comprises in addition 1.00 max. wt.-% of manganese and/or 0.03 max. wt.-% of phosphorus and/or 0.015 max. wt.-% of sulfur and/or 1.0 max. wt.-% of silicon and/or niobium between 0.15 and 0.45 wt.-% and/or 0.5 max. wt.-% of molybdenum and/or 0.10 max. wt.-% of nitrogen. The nitrogen has significant influence on metallurgical phases and can change the metallurgical phase from martensitic to austenitic or semi-austenitic. The balance of the composition is iron.

The powder has a ferrite content of less than 5 wt.-%.

The powder is a purely metal powder without non-metallic additives such as fluxing agents etc.

In a preferred embodiment, the powder according to the invention comprises the following components in weight percent (wt.-%) :

| | |
|---|---|
| carbon: | 0.02 (max. 0.04) wt.-% |
| phosphorus: | 0.01 (max. 0.02) wt.-% |
| silicon: | 0.4 (max. 0.6) wt.-% |
| nickel: | 4.2 ±0.2 wt.-% |
| copper: | 3.6 ±0.2 wt.-% |
| manganese: | 0.1 (max. 0.2) wt.-% |
| sulfur: | 0.01 (max. 0.01) wt.-% |
| chromium: | 14.3 ±0.2 wt.-% |
| molybdenum: | 0.0 (max. 0.2) wt.-% |
| niobium: | 0.30 ±0.05 wt.-% |
| Iron: | balance |
| Nitrogen: | 0.04 (max. 0.08) wt.-% |

The median particle size (d50) of the preferred example is between 30 µm and 40 µm.

The method according to the invention is explained with reference to Figs. 1 and 2 using laser sintering as an additive process for manufacturing the object 3. The data of the 3D-CAD model of the object 3 to be built are converted in a known manner and transferred to the computer of the laser sintering apparatus for controlling the laser sintering apparatus during the sintering process. The powder according to the invention is dispensed onto the support or a previous layer and thereafter sintered or melted in each layer at locations corresponding to the cross-section of the object 3.

A laser with a power between 20 W and 1 kW, preferably approximately 200 W, is used. The focused laser beam spot size at the powder melting level is between 20 µm and 500 µm, preferably approximately 120 µm. The laser scanning velocity is between 50 mm/s and 10000 mm/s, preferably approximately 1000 mm/s and the distance between adjacent scan lines is between 0.02 mm and 0.5 mm, preferably approximately 0.1 mm. The thickness of the powder layer is between 10 µm and 200 µm preferably approximately 20 µm. These parameters are selected depending on the ranges depending on the object to be built.

An inert gas flow may be used to avoid chemical reaction of the powder with surrounding material or air. During the sintering process the laser beam scans the surface of the metal powder layer. The high intensity laser radiation is absorbed by the powder particles and creates extremly rapid heating in the powder to melt the powder. As the scanned laser beam moves on, heat is conducted away from the previously melted area via the solid metal and/or metal powder under and/or around it, leading to rapid cooling and resolidification. By keeping the temperature of the process chamber relatively low, for example by not applying additional heating in addition to the laser beam, a high cooling rate and lower temperature after resolidification is obtained. It is also possible to apply active cooling to remove heat from the solidified material during the laser processing to obtain an even higher cooling rate and/or lower temperature after resolidification. Active cooling can be carried out for example by means of cooling the support platform or by means of a flow of cooled gas.

When the laser sintering process is finished, the unsintered powder is removed and the laser sintered object is removed from the build container 1. The laser sintered object is a stainless steel object having less than 20% of the austenitic phase.

For specific applications the object 3 is post-treated. Heat treatment can be carried out at a variety of temperatures to develop specific properties. For example, the eight standard heat treatments H900, H925, H1025, H1075, H1100, H1150, H1150+1150, H1150-M can be carried out. Also, solution annealing (SA) can be carried out to obtain desired properties. It has been observed that high cooling rates to a relatively low temperature during laser processing are essential in order to obtain a complete martensitic transformation and to avoid excess amount of remaining austenite phase in the resolidified metal. This is important for the subsequent post-treatments like H900, H925, H1025, etc. if the treatments are to be done without solution annealing and quenching. If the cooling rate is not sufficient and the martensitic transformation is only partial then additional solution annealing and subsequent quench is needed to obtain a fully martensitic phase structure which is more favourable for post-hardening treatments like H900, H925.

The method according to the invention has the additional advantage that by carrying out the laser processing with rapid cooling and resolidification, additional steps of post-treatment such as solution annealing and quenching can be omitted. Hence, the process chain becomes shorter.

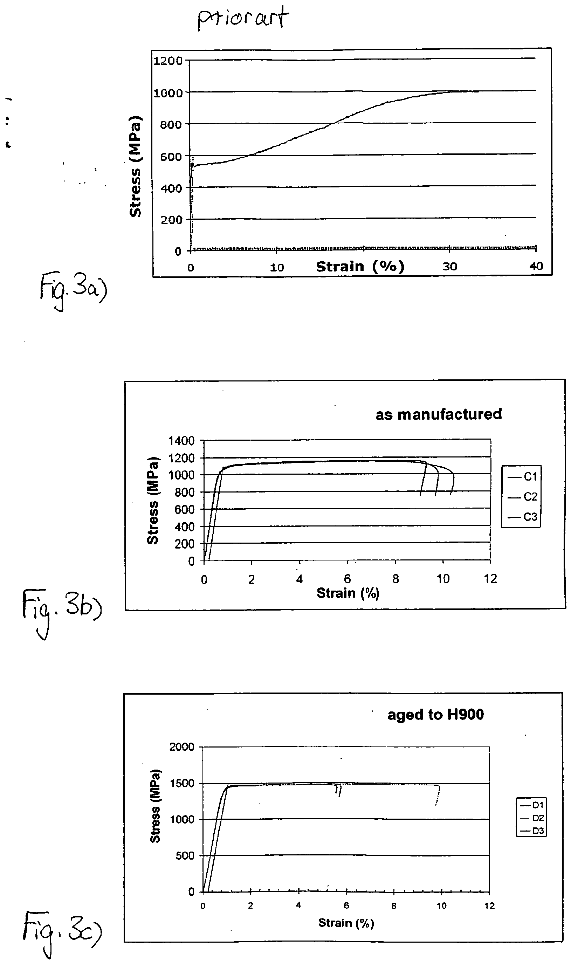

Fig. 3a) to 3c) show a typical tensile testing behaviour of a laser sintered specimen. The tensile testing behaviour has been tested with a 3.56mm thick flat test specimen according to MPIF 10 standard.

Fig. 3a) shows the result for a specimen produced using known stainless steel powder 17-4 PH.

Fig. 3b) shows a typical tensile testing behaviour of specimens produced using the metal powder according to the above described preferred embodiment of the invention. C1, C2 and C3 are measurement results from three specimens manufactured under the same conditions, i.e. identical process parameters and geometries.

Fig. 3c) shows a typical tensile testing behaviour of specimens which are aged according to H900 condition after laser sintering. D1, D2 and D3 are measurement results of three specimens with the same process parameters and the same H900 heat treatment condition. As can be seen from the comparison with the prior art, the object produced using the metal powder according to the invention has considerably higher strength than the object which is produced using known stainless steel powder. Strength can be enhanced further by using heat treatment.

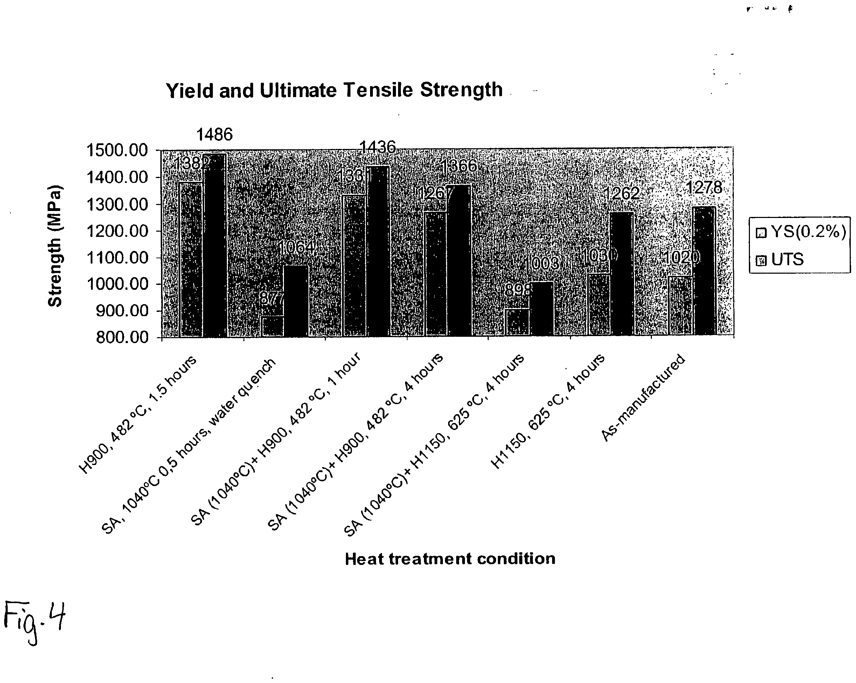

Fig. 4 shows the yield and ultimate tensile strength of objects produced by laser sintering using the metal powder according to the above preferred embodiment wherein the object underwent various heat treatment conditions, respectively. As can be seen, the precipitation hardening is applicable.

In the following, the mechanical properties of an object produced using the known stainless steel 17-4 PH powder are compared to an identical object produced using the metal powder according to the invention and which was H900 heat treated after finishing the laser sintering process:

| Property | object produced using known stainless steel powder 17-4 PH | object produced using metal powder according to invention |
|---|---|---|
| | | H900 heat treated |
| Ultimate tensile strength, MPa | 1050 ±50 MPa | 1486 ±50 MPa |
| | (152 ±7 ksi) | (216 ±7 ksi) |
| Yield strength (Rp 0.2 %), MPa | 540 ±50 MPa | 1382 ±50 MPa |
| | (78 ±7 ksi) | (200 ±7 ksi) |
| Young's Modulus (GPa) | 180 ±20 GPa | 190 ±20 GPa |
| | (26 ±3 msi) | (28 ±3 msi) |
| Remaining elongation | 30 ±5 % | 5 ±2 % |
| Surface hardness | | |
| - as laser-sintered | 230 ±20 HV1 | 30 ±5 HRC |
| - H900 aged | xxxxxx | 43 ±3 HRC |

HV1 is the hardness in Vickers units using 1 kg load for testing; HRC is the hardness in Rockwell C scale.

The objects produced with laser sintering and using the metal powder according to the invention, are stronger, stiffer and harder than that produced using the powder according to the prior art. Preferably a heat treatment comprising ageing at 482°C for one hour and air cooling provides superior mechanical properties due to precipitation hardening. Solution annealing and quenching is not required before the ageing treatment.

All numerical values given above are to be understood as including the usual measuring tolerances.

The metal powder according to the invention is not limited to the examples described above. For example the metal powder can be a blend of different component powders each having the above composition but which have different particle size distributions. Such blends can be beneficial for fine tuning the grain size distribution of the resulting blended powder.

The invention is not limited in the application to the laser sintering technique. Moreover, electron beam sintering or melting can also be used. The invention is not even limited to additive layer-wise production methods but includes other additive and free-form production methods of three-dimensional objects such as, for example, the 3D laser-cladding method.

## Claims

1. Metal powder for use in an additive production method of three-dimensional objects wherein the powder is solidified by means of a laser or electron beam or another heat source,
wherein the powder is a stainless steel powder,
wherein the powder comprises iron and the following components by weight percent (wt.-%)
| | |
|---|---|
| carbon: | 0.07 max. wt-%, |
| chromium: | 14.00 - 15.50 wt.-%, |
| nickel: | 3.5 - 5.0 wt.-%, |
| manganese: | 1.00 max. wt.-%, |
| phosphorus: | 0.03 max. wt.-%, |
| sulfur: | 0.015 max. wt.-%, |
| silicon: | 1.00 max. wt.-%, |
| molybdenum: | 0.5 max. wt.-%, |
| nitrogen: | 0.10 max. wt.-%, |
| copper: | 3.0 - 4.5 wt.-%, |
| optionally niobium: | 0.15 - 0.45 wt.-%, and |
| iron: | balance, |
wherein the powder particles have a median particle size d50 between 20µm and 100µm and
wherein the content of ferrite is less than 5 wt.-%, and
wherein the powder particles have an approximately spherical shape with an aspect ratio up to 1:2.

2. The metal powder according to claim 1, wherein the powder is produced by atomisation.

3. The metal powder according to one of claims 1 to 2, wherein the component elements are contained in each powder particle in a pre-alloyed manner.

4. The metal powder according to one of claims 1 to 2, wherein the powder is a blend of different component powders having different grain size distributions and/or chemical compositions.

5. The metal powder according to one of claims 1 to 4, **characterized in that** the powder is in the martensitic state.

6. The metal powder according to one of claims 1 to 5, comprising
| | |
|---|---|
| carbon: | 0.02 to 0.04 wt.-% |
| phosphorus: | 0.01 to 0.02 wt.-% |
| silicon: | 0.4 to 0.6 wt.-% |
| nickel: | 4.2 ±0.2 wt.-% |
| copper: | 3.6 ±0.2 wt.-% |
| manganese: | 0.1 to 0.2 wt.-% |
| sulfur: | 0.01 to 0.01 wt.-% |
| chromium: | 14.3 ±0.2 wt.-% |
| molybdenum: | 0.0 to 0.2 wt.-% |
| niobium: | 0.3 ±0.05 wt.-% |
| Iron: | balance |
| Nitrogen: | 0.04 to 0.08 wt.-% |

7. Method for the production of three-dimensional objects from a powder, wherein the powder is applied in an additive manner and is melted by means of a laser or electron beam, and wherein the melted powder undergoes rapid cooling and resolidification, **characterized in that** the powder used is a powder according to one of claims 1 to 6.

8. The method according to claim 7, wherein the powder is applied in a layer-wise manner and selectively solidified in each layer at locations corresponding to the cross-section of the object.

9. The method according to claim 7 or 8, wherein a laser beam is used with a laser power between 20 W and 1 kW, preferably approximately 200 W.

10. The method according to one of claims 7 to 9, wherein the focused laser beam spot size at the powder melting level is between 20 µm and 500 µm, preferably approximately 120 µm.

11. The method according to one of claims 7 to 10, wherein the laser scanning velocity is between 50 mm/s and 10000 mm/s, preferably approximately 1000 mm/s.

12. The method according to one of claims 8 to 11, wherein the distance between adjacent scan lines is between 0.02 and 0.5 mm, preferably approximately 0.1 mm.

13. The method according to one of claims 8 to 12, wherein the thickness of the powder layer is between 10 µm and 200 µm, preferably approximately 20 µm.

14. The method according to one of claims 7 to 13, wherein the object is precipitation hardened after the layer-wise formation.

## Patentansprüche

1. Metallpulver zur Verwendung in einem additiven Herstellungsverfahren dreidimensionaler Objekte, wobei das Pulver mittels eines Lasers oder Elektronenstrahls oder einer anderen Wärmequelle verfestigt wird,
wobei das Pulver ein rostfreies Stahlpulver ist,
wobei das Pulver Eisen und die folgenden Bestandteile in Gewichtsprozent (Gew.-%) umfasst
| | |
|---|---|
| Kohlenstoff: | max. 0,07 Gew.-%, |
| Chrom: | 14,00 - 15,50 Gew.-%, |
| Nickel: | 3,5 - 5,0 Gew.-%, |
| Mangan: | max. 1,00 Gew.-%, |
| Phosphor: | max. 0,03 Gew.-%, |
| Schwefel: | max. 0,015 Gew.-%, |
| Silicium: | max. 1,00 max. Gew.-%, |
| Molybdän: | max. 0,5 Gew.-%, |
| Stickstoff: | max. 0,10 Gew.-%, |
| Kupfer: | 3,0 - 4,5 Gew.-%, |
| optional Niob: | 0,15 - 0,45 Gew.-%, und |
| Eisen: | Rest, |
wobei die Pulverteilchen eine mittlere Teilchengröße d50 zwischen 20µm und 100µm aufweisen und
wobei der Gehalt an Ferrit weniger als 5 Gew.-% beträgt, und wobei die Pulverteilchen eine annähernd sphärische Form mit einem Aspektverhältnis von bis zu 1:2 aufweisen.

2. Das Metallpulver nach Anspruch 1, wobei das Pulver durch Pulverisierung hergestellt ist.

3. Das Metallpulver nach einem der Ansprüche 1 bis 2, wobei die enthaltenen Elemente in jedem Pulverpartikel vorlegiert enthalten sind.

4. Das Metallpulver nach einem der Ansprüche 1 bis 2, wobei das Pulver ein Gemisch aus verschiedenen Komponentenpulvern mit unterschiedlichen Korngrößenverteilungen und/oder chemischen Zusammensetzungen ist.

5. Das Metallpulver nach einem der Ansprüche 1 bis 4, **dadurch gekennzeichnet, dass** das Pulver im martensitischen Zustand vorliegt.

6. Das Metallpulver nach einem der Ansprüche 1 bis 5, umfassend
| | |
|---|---|
| Kohlenstoff: | 0,02 bis 0,04 Gew.-% |
| Phosphor: | 0,01 bis 0,02 Gew.-% |
| Silicium: | 0,4 bis 0,6 Gew.-% |
| Nickel: | 4,2 ±0,2 Gew.-% |
| Kupfer: | 3,6 ±0,2 Gew.-% |
| Mangan: | 0,1 bis 0,2 Gew.-% |
| Schwefel: | 0,01 bis 0,01 Gew.-% |
| Chrom: | 14,3 ±0,2 Gew.-% |
| Molybdän: | 0,0 bis 0,2 Gew.-% |
| Niob: | 0,3 ±0,05 Gew.-% |
| Eisen: | Rest |
| Stickstoff: | 0,04 bis 0,08 Gew.-%. |

7. Das Verfahren zur Herstellung dreidimensionaler Objekte aus einem Pulver, wobei das Pulver in einer additiven Weise aufgebracht und mittels eines Laser- oder Elektronenstrahls geschmolzen wird und wobei das geschmolzene Pulver eine rasche Abkühlung und Wiederverfestigung erfährt, **dadurch gekennzeichnet, dass** als Pulver ein Pulver nach einem der Ansprüche 1 bis 6 verwendet wird.

8. Verfahren nach Anspruch 7, wobei das Pulver schichtweise aufgebracht und in jeder Schicht selektiv an Stellen verfestigt wird, die dem Querschnitt des Objekts entsprechen.

9. Das Verfahren nach Anspruch 7 oder 8, wobei ein Laserstrahl mit einer Laserleistung zwischen 20 W und 1 kW, vorzugsweise etwa 200 W, verwendet wird.

10. Das Verfahren nach einem der Ansprüche 7 bis 9, wobei die fokussierte Laserstrahlfleckgröße in der Pulverschmelzebene zwischen 20 µm und 500 µm, vorzugsweise etwa 120 µm, beträgt.

11. Das Verfahren nach einem der Ansprüche 7 bis 10, wobei die Laserscangeschwindigkeit zwischen 50 mm/s und 10000 mm/s, vorzugsweise etwa 1000 mm/s, beträgt.

12. Das Verfahren nach einem der Ansprüche 8 bis 11, wobei der Abstand zwischen benachbarten Scanlinien zwischen 0,02 und 0,5 mm, vorzugsweise etwa 0,1 mm, beträgt.

13. Das Verfahren nach einem der Ansprüche 8 bis 12, wobei die Dicke der Pulverschicht zwischen 10 µm und 200 µm, vorzugsweise etwa 20 µm, beträgt.

14. Das Verfahren nach einem der Ansprüche 7 bis 13, wobei das Objekt nach der schichtweisen Bildung ausscheidungsgehärtet wird.

## Revendications

1. Poudre métallique pour une utilisation dans un procédé de production additive d'objets tridimensionnels dans lequel la poudre est solidifiée au moyen d'un faisceau laser ou électronique ou d'une autre source de chaleur,
laquelle poudre est une poudre d'acier inoxydable,
laquelle poudre comprend du fer et les composants suivants en pourcentages en poids (% en poids)
| | |
|---|---|
| carbone : | 0,07 % en poids au maximum, |
| chrome : | 14,00 à 15,50 % en poids, |
| nickel : | 3,5 à 5,0 % en poids, |
| manganèse : | 1,00 % en poids au maximum, |
| phosphore : | 0,03 % en poids au maximum, |
| soufre : | 0,015 % en poids au maximum, |
| silicium : | 1,00 % en poids au maximum, |
| molybdène : | 0,5 % en poids au maximum, |
| azote : | 0,10 % en poids au maximum, |
| cuivre : | 3,0 à 4,5 % en poids, |
| éventuellement niobium : | 0,15 à 0,45 % en poids, et |
| fer : | le reste, |
dans laquelle les particules de poudre ont une granulométrie médiane d50 comprise entre 20 µm et 100 µm, et
dans laquelle la teneur en ferrite est inférieure à 5 % en poids, et
dans laquelle les particules de poudre ont une forme approximativement sphérique avec un rapport d'aspect allant jusqu'à 1/2.

2. Poudre métallique selon la revendication 1, laquelle poudre est produite par atomisation.

3. Poudre métallique selon l'une des revendications 1 et 2, dans laquelle les éléments constitutifs sont contenus dans chaque particule de poudre d'une manière pré-alliée.

4. Poudre métallique selon l'une des revendications 1 et 2, laquelle poudre est une combinaison de différentes poudres constitutives ayant des distributions de granulométrie et/ou des compositions chimiques différentes.

5. Poudre métallique selon l'une des revendications 1 à 4, **caractérisée en ce que** la poudre est à l'état martensitique.

6. Poudre métallique selon l'une des revendications 1 à 5, comprenant
| | |
|---|---|
| carbone : | 0,02 à 0,04 % en poids |
| phosphore : | 0,01 à 0,02 % en poids |
| silicium : | 0,4 à 0,6 % en poids |
| nickel : | 4,2 ± 0,2 % en poids |
| cuivre : | 3,6 ± 0,2 % en poids |
| manganèse : | 0,1 à 0,2 % en poids |
| soufre : | 0,01 à 0,01 % en poids |
| chrome : | 14,3 ± 0,2 % en poids |
| molybdène : | 0,0 à 0,2 % en poids |
| niobium : | 0,3 ± 0,05 % en poids |
| fer : | le reste |
| azote : | 0,04 à 0,08 % en poids |

7. Procédé pour la production d'objets tridimensionnels à partir d'une poudre, dans lequel la poudre est appliquée d'une manière additive et est fondue au moyen d'un faisceau laser ou électronique, et dans lequel la poudre fondue subit un refroidissement et une re-solidification rapides, **caractérisé en ce que** la poudre utilisée est une poudre selon l'une des revendications 1 à 6.

8. Procédé selon la revendication 7, dans lequel la poudre est appliquée en couches et est solidifiée sélectivement dans chaque couche en des emplacements correspondant à la section transversale de l'objet.

9. Procédé selon la revendication 7 ou 8, dans lequel un faisceau laser est utilisé avec une puissance de laser comprise entre 20 W et 1 kW, de préférence d'environ 200 W.

10. Procédé selon l'une des revendications 7 à 9, dans lequel la taille du point du faisceau laser focalisé au niveau de la fusion de la poudre est comprise entre 20 µm et 500 µm, de préférence d'environ 120 µm.

11. Procédé selon l'une des revendications 7 à 10, dans lequel la vitesse de balayage du laser est comprise entre 50 mm/s et 10 000 mm/s, de préférence d'environ 1 000 mm/s.

12. Procédé selon l'une des revendications 8 à 11, dans lequel la distance entre des lignes de balayage adjacentes est comprise entre 0,02 et 0,5 mm, de préférence d'environ 0,1 mm.

13. Procédé selon l'une des revendications 8 à 12, dans lequel l'épaisseur de la couche de poudre est comprise entre 10 µm et 200 µm, de préférence d'environ 20 µm.

14. Procédé selon l'une des revendications 7 à 13, dans lequel l'objet est durci par précipitation après la formation en couches.
